# FASCICULE DE BREVET EUROPEEN

(11) **EP 3 545 203 B1**
(45) Date de publication et mention de la délivrance du brevet: **18.08.2021**
(21) Numéro de dépôt: 17832270.7
(22) Date de dépôt: 21.12.2017
(51) Int. Cl.: F16C 17/04, F16C 33/10

(54) **BUTEE FIXE D'UN SYSTEME DE BUTEES FIXE ET TOURNANTE DESTINE A SUPPORTER UNE CHARGE AXIALE**
FESTE LAGERFLÄCHE EINES SYSTEMS AUS FESTEN UND ROTIERENDEN LAGERFLÄCHEN ZUM STANDHALTEN EINER AXIALLAST
FIXED ABUTMENT OF A SYSTEM OF FIXED AND ROTARY ABUTMENTS INTENDED FOR WITHSTANDING AN AXIAL LOAD

(30) Priorité: 10.01.2017 FR 1750196
(43) Date de publication de la demande: 02.10.2019
(73) Titulaire: RENAULT s.a.s., 92100 Boulogne-Billancourt (FR)
(72) Inventeur: LUERE, Vincent, 78140 Velizy-Villacoublay (FR)
(86) Numéro de dépôt international: PCT/FR2017/053777
(87) Numéro de publication internationale: WO 2018/130756

(56) Documents cités:
- EP-A1- 2 535 606
- EP-A1- 2 626 604
- DE-C- 971 722
- JP-U- S6 086 053
- US-B1- 8 672 550
- US-B1- 9 353 789

## Description

La présente invention se rapporte à une butée fixe d'un système de butées fixe et tournante, en particulier pour turbocompresseur et notamment d'un véhicule à moteur.

Le circuit de suralimentation en comburant d'un véhicule à moteur à combustion interne comprend bien souvent un turbocompresseur qui permet en compressant de l'air d'envoyer une plus grande quantité de comburant, l'oxygène, dans les cylindres de la chambre de combustion où ce comburant se mélange avec le carburant. Classiquement ce turbocompresseur comprend une roue de turbine entraînée par l'énergie des gaz d'échappement, monté sur le même arbre de rotation qu'une roue de compresseur de l'air d'admission. L'arbre est monté à rotation dans un palier de guidage à l'intérieur d'un carter, entre la roue de turbine et la roue de compresseur. Les variations de pression dans le turbocompresseur engendrent des poussées et contre-poussées sur l'arbre créant une charge axiale qui peut engendrer des mouvements de l'arbre suivant son axe, et le cas échéant de son palier de guidage. Pour empêcher tout mouvement axial de l'arbre, et le cas échéant de son palier de guidage, un système de butées est prévu pour supporter la charge axiale selon l'axe de l'arbre.

On connaît un système de butées comprenant une butée tournante qui tourne solidairement avec l'arbre et une butée fixe qui fait face à la butée tournante et à travers laquelle passe l'arbre du turbocompresseur.
La butée fixe est classiquement formée d'un flasque, plaque globalement circulaire, percé d'une ouverture centrale à travers laquelle passe l'arbre du turbocompresseur, comprenant une série de patins présents sur la face de la plaque et en couronne suivant la circonférence de cette ouverture. Un agent lubrifiant, qui provient d'une source externe, est par exemple introduit par un orifice formé dans le carter logeant le dispositif et est conduit notamment vers les butées.
La surface des patins est structurée pour assurer la création d'un film de lubrifiant entre cette butée fixe et la butée tournante. La surface structurée des patins par des reliefs comme par exemple des épaulements et/ou rainures, définit la surface de portance hydraulique entre les faces en regard de la butée fixe et de la butée tournante. En fonctionnement, ces reliefs créent des microréservoirs aptes à recevoir l'agent lubrifiant qui se répartit en film sous l'effet de la force engendrée par la rotation de la butée tournante. Lors de la rotation de l'arbre entraînant solidairement la butée tournante, ce film lubrifiant crée une force entre les butées qui a tendance à éloigner la butée tournante de la butée fixe, de l'ordre d'une vingtaine de micromètres, ce qui a pour effet de faciliter un frottement de glissement entre les butées tout en évitant les frottements mécaniques entre la surface des patins et la surface de la butée tournante en regard.

Pour un rendement élevé du moteur, l'arbre du turbocompresseur doit pouvoir tourner à vitesses variables et être apte à tourner à très grande vitesse. La performance du turbocompresseur peut être entravée par l'existence de frottements entre les patins de la butée fixe et la butée tournante. On peut ainsi être amenés à rechercher à réduire la surface de portance hydraulique (dite aussi surface portante) entre les butées afin de réduire les frottements de glissement. Toutefois cette réduction de surface portante pourra entraîner une diminution de la capacité d'une butée à assurer la présence d'un film de lubrifiant continu la protégeant d'un contact mécanique avec l'autre butée, ce qui aurait pour conséquence de l'endommager irrémédiablement. Le document US 9 353 789 B1 divulgue une butée fixe suivant le préambule de la revendication 1.

Il est donc nécessaire de pouvoir assurer la robustesse du système vis-à-vis du maintien du film de lubrifiant en toute circonstance et notamment en cas d'événements perturbateurs tel que le passage d'impuretés dans le lubrifiant ou la variation de la charge axiale. En effet par exemple la présence d'un grain d'impureté dans le lubrifiant peut rayer la surface des patins de la butée fixe jusqu'à l'usiner, et la butée ne pourra plus remplir sa fonction. De même une brusque augmentation de la charge axiale peut engendrer une forte pression sur les butées jusqu'à les mettre en contact mécanique.

L'invention vise à résoudre les inconvénients évoqués ci-dessus et à répondre au besoin d'un système de butées plus performant.

A cet effet l'invention propose une butée fixe d'un système de butées fixe et tournante destiné à supporter une charge axiale selon l'axe d'un arbre de rotation monté dans un palier de guidage, en particulier d'un turbocompresseur, ladite butée fixe se présentant sous forme d'un flasque percé d'une ouverture traversante laissant passer l'arbre, munie de patins présents sur la face dudit flasque, ladite butée fixe comprenant au moins deux séries de patins : une première série de patins présents sur la face dudit flasque et une deuxième série de patins présents sur ladite même face du flasque et en retrait de ladite première série de patins selon la direction longitudinale de l'axe de ladite ouverture.

Selon l'invention, la deuxième série de patins est en retrait de ladite première série de patins d'une distance de quelques micromètres selon la direction longitudinale de l'axe de ladite ouverture.

Selon un mode préféré de l'invention, les patins de la première série sont agencés en couronne suivant le pourtour de l'ouverture du flasque. De préférence aussi selon l'invention, la deuxième série de patins est agencée en suivant la plus grande circonférence de la couronne formée par la première série de patins.

La surface portante ou de portance hydraulique, est définie par les zones structurées des patins, pour une série de patins donnée.

Selon l'invention, la deuxième série de patins présente une surface de portance hydraulique définie par la surface des zones structurées de ses patins qui est soit sensiblement identique à celle de la première série de patins, ou soit strictement supérieure à celle des patins de la première série.

Du fait que la deuxième série de patins est disposée en retrait de la première série, cette deuxième série n'assure pas la portance hydraulique dans un fonctionnement usuel. Néanmoins, en cas de défaillance de la première série de patins, par exemple par usure, la deuxième série de patins prend le relais pour assurer la portance hydraulique. Elle assure ainsi la fiabilité et la robustesse du système avec une surface portante supérieure ou égale à la première selon les modes de réalisation précités.

L'invention concerne aussi un système de butées se montant autour d'un arbre de rotation, en particulier d'un turbocompresseur monté dans un palier de guidage, pour supporter une charge axiale selon l'axe de l'arbre, ledit système comprenant une butée tournante se montant solidairement autour dudit arbre, et une butée fixe à patins avec des zones structurées apte à être traversée par ledit arbre, lesdites butées étant disposées face à face selon la direction longitudinale de leur axe, correspond à l'axe de l'arbre, et de manière à ce que les zones structurées desdits patins de la butée fixe soient face à la butée tournante, lesdites butées étant séparées en fonctionnement par un film lubrifiant. Selon l'invention ladite butée fixe comprend au moins deux séries de patins et est telle que définie précédemment. Ladite butée tournante se présente sous forme d'un flasque muni d'une ouverture traversante réceptrice de l'arbre et ayant un diamètre au moins de l'ordre de celui couvert à la fois par la première et la deuxième séries de patins.

En particulier selon l'invention, le système de butées est équipé pour recevoir un agent lubrifiant, et la première série de patins assure la portance hydraulique usuelle entre ladite butée fixe et ladite butée tournante. La deuxième série de patins assure la portance hydraulique entre ladite butée fixe et ladite butée tournante, en cas de détérioration de la surface des patins de la première série.

L'invention fournit aussi un turbocompresseur dans un dispositif de suralimentation de comburant gazeux, en général de l'air, d'un moteur à combustion interne, comprenant un arbre de rotation monté entre une roue de turbine, entraînée par l'énergie des gaz d'échappement du moteur, et une roue de compresseur du comburant (air) d'admission, ledit arbre étant monté à rotation dans un palier de guidage équipé d'un système de butées fixe et tournante apte à supporter une charge axiale selon l'axe de l'arbre, ledit système de butées comprenant une butée fixe présentant au moins deux séries de patins et est tel que décrit précédemment.

L'invention concerne aussi un véhicule automobile à moteur comprenant un turbocompresseur tel que décrit ci-dessus.

Dans la description de l'invention, on considère que la butée fixe comprend au moins une première et une deuxième série de patins, ce qui n'exclut pas une troisième série de patins. On peut en effet prévoir de manière générale une pluralité de séries qui seraient décalées axialement de quelques microns les unes à la suite des autres, toutefois il est préférable de limiter le nombre de séries de patins pour ne pas avoir à fournir une butée tournante de grande dimension, ce qui entraînerait des risques plus importants de frottements. On privilégie donc une butée fixe ne comprenant que deux séries de patins décalées.

D'autres particularités et avantages de l'invention ressortiront à la lecture de la description faite ci-après d'un mode de réalisation particulier de l'invention, donné à titre indicatif mais non limitatif, en référence aux dessins annexés pour lesquels :
- la figure 1 illustre schématiquement, selon une vue de face, un système de butées comprenant une butée fixe à deux séries de patins, selon l'invention ;
- la figure 2 illustre schématiquement, selon une vue en coupe radiale II-II, les butées du système de butées schématisé en figure 1, la figure 2A illustrant en coupe un patin d'une série ;
- la figure 3 illustre schématiquement, selon une vue partielle en perspective et en écorché, l'agencement de la partie relative à l'arbre de rotation d'un turbocompresseur guidé dans un palier avec un système de butées, monté dans un carter.

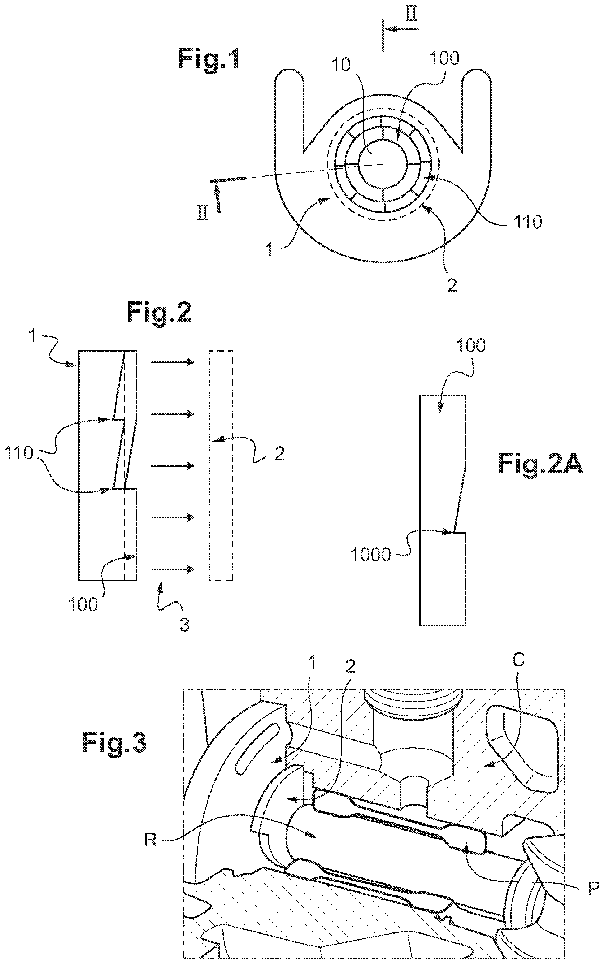

La figure 1 illustre, par une vue de face schématique, un système de butées qui comprend une butée fixe 1 sous forme d'un flasque ayant la forme d'une plaque globalement circulaire, percé d'une ouverture traversante centrale 10 destinée à laisser passer un arbre de rotation. Le système de butées comprend également une butée tournante 2 se présentant sous forme d'un flasque, en particulier d'une rondelle, dont la trace circulaire est symbolisée par des pointillés sur la figure 1.

Selon l'invention, la face du flasque de la butée fixe présente une première série de patins 100 agencés en couronne suivant le pourtour de l'ouverture centrale 10 et une deuxième série de patins 110 agencés en couronne autour de la première série de patins, suivant le plus grand diamètre de la couronne de la première série de patins.

La figure 2 illustre schématiquement une vue en coupe partielle dans la zone des patins de la figure 1, l'échelle n'étant pas respectée entre les éléments pour la clarté du dessin. La butée fixe à patins 1 est disposée en regard de la butée tournante 2. Les patins de la deuxième série 110 sont disposés en retrait, de quelques micromètres selon la direction longitudinale de l'axe de ladite ouverture, de la première série de patins 100 selon la direction longitudinale X de l'axe de ladite ouverture. Le point le plus haut en surface de la première série de patins dépasse ainsi le point le plus haut en surface de la deuxième série de patins par exemple d'environ 2 à 3 µm.

Les patins de la première et de la deuxième série présentent des zones structurées par des épaulements, tel qu'illustré en figure 2A pour un patin de la première série, créant un relief en surface des patins dont des creux 1000 qui constituent des microréservoirs pour l'agent lubrifiant utilisé dans le système de butées. Les butées fixe et tournante sont disposées de manière à ce que les zones structurées des patins soient face à la butée tournante pour assurer en fonctionnement la création d'un film de lubrifiant 3 entre cette butée fixe et la butée tournante, évitant un contact mécanique entre les deux butées.

L'agent lubrifiant peut être une huile qui est acheminée depuis un réservoir vers le dispositif qui comprend le système de butées avec l'acheminement de l'huile prévu jusqu'au système de butées.

La surface de portance hydraulique, dite aussi surface portante, de chaque série de patins est définie par la surface des zones structurées des patins respectifs de la série considérée. La détermination de la surface des zones structurées est connue en soi, elle est basée sur la prise en considération de la hauteur du profil des reliefs et de la largeur des reliefs.

En général les butées sont des pièces métalliques. La butée fixe à patins est réalisée par emboutissage (par frappe) d'une plaque métallique créant des embossages structurés qui forment la série de patins. Les deux séries de patins sont avantageusement créées simultanément lors de l'emboutissage de la plaque.

En figure 3 est illustré un agencement de la partie relative à un arbre de rotation R d'un turbocompresseur monté à rotation dans un palier de guidage P et avec un système de butées, monté dans un carter C. La butée tournante 2 est montée autour de l'arbre R et solidairement audit arbre qui l'entraîne en rotation avec lui. La butée fixe 1 est montée coaxialement avec la butée tournante mais n'est pas solidaire de l'arbre de rotation afin d'être maintenue fixe. Le turbocompresseur est avantageusement celui du système de suralimentation en air d'un moteur à combustion interne dont le fonctionnement a été brièvement rappelé en introduction de la description.

Selon l'invention, la butée tournante du système de butée se présente sous forme d'un flasque, qui peut être réduit à une simple rondelle, muni d'une ouverture traversante réceptrice de l'arbre. Le diamètre global de son flasque doit être au moins de l'ordre de celui couvert à la fois par la première et la deuxième séries de patins.

Du fait que la surface de la deuxième série de patins soit en retrait de la surface de la première série de patins, c'est donc cette première série de patins qui assure normalement la portance hydraulique avec la butée tournante. En cas d'usure de la première série de patins, par exemple à cause d'un passage d'impuretés provoquant une rupture du film d'huile et/ou d'une usure des patins de la première série, la portance se décalera alors sur la deuxième série de patins.

De préférence selon l'invention, la première série de patins est de type « classique », elle assure en conditions normales d'utilisation la portance hydraulique entre butée fixe et butée tournante. La première série de patins est de préférence dimensionnée au plus juste, pour avoir une surface portante minimale et avoir le moins possible de frottements de glissement.

La deuxième série de patins peut présenter une surface de portance sensiblement identique à la première si on souhaite privilégier le maintien des performances en frottements, dans la mesure où la première série de patins est dimensionnée dans ce but.

Cette deuxième série de patins peut présenter une surface de portance strictement supérieure à la première si on souhaite privilégier la fiabilité du système en cas de fonctionnement anormal (passage d'impuretés dans le lubrifiant par exemple)

L'invention a atteint ses objectifs en proposant un système de butées dont la butée fixe à patins permet d'assurer la robustesse du système vis-à-vis du maintien du film de lubrifiant entre les butées en toute circonstance. La butée fixe est simple de réalisation, la butée tournante est facile à adaptée au système. L'invention s'applique plus spécifiquement au domaine des véhicules à moteur à combustion interne, en particulier dont le carburant est du diesel ou de l'essence.

## Revendications

1. Butée fixe d'un système de butées fixe et tournante destiné à supporter une charge axiale selon l'axe d'un arbre de rotation monté dans un palier de guidage, en particulier d'un turbocompresseur, ladite butée fixe se présentant sous forme d'un flasque percé d'une ouverture traversante laissant passer l'arbre de rotation, présentant sur sa face des patins avec des zones structurées, ladite butée fixe comprenant au moins deux séries de patins, une première série de patins (100) avec des zones structurées présents en une première couronne sur la face dudit flasque, et une deuxième série de patins (110) avec des zones structurées présents en une deuxième couronne coaxiale avec la première couronne sur ladite face du flasque, en retrait de ladite première série de patins selon la direction longitudinale de l'axe de ladite ouverture (10), **caractérisée en ce que** la deuxième série de patins présente une surface de portance hydraulique définie par les zones structurées de ses patins qui est sensiblement identique ou strictement supérieure à celle de la première série de patins.

2. Butée selon la revendication 1, **caractérisée en ce que** ladite première série de patins est en retrait de ladite première série de patins d'une distance de quelques micromètres selon la direction longitudinale de l'axe de ladite ouverture.

3. Butée selon l'une des revendications 1 à 2, **caractérisée en ce que** les patins de la première série sont agencés en couronne suivant le pourtour de l'ouverture (10) du flasque et les patins de la deuxième série de patins sont agencés en couronne suivant le pourtour de la plus grande circonférence de la couronne formée par ladite première série de patins.

4. Système de butées se montant autour d'un arbre de rotation d'un turbocompresseur monté dans un palier de guidage pour supporter une charge axiale selon l'axe de l'arbre, ledit système comprenant une butée tournante se montant solidairement autour dudit arbre, et une butée fixe à patins avec des zones structurées, apte à être traversée par ledit arbre, lesdites butées étant disposées face à face selon la direction longitudinale de leur axe, correspond à l'axe de l'arbre, et de manière à ce que les zones structurées desdits patins de la butée fixe soient face à la butée tournante, lesdites butées étant séparées en fonctionnement par un film lubrifiant, **caractérisé en ce que** ladite butée fixe (1) comprend au moins deux séries de patins et est telle que définie en revendication 1, et que ladite butée tournante (2) se présente sous forme d'un flasque muni d'une ouverture traversante réceptrice de l'arbre et ayant un diamètre de l'ordre de celui couvert à la fois par la première et la deuxième séries de patins.

5. Système de butées selon la revendication précédente, **caractérisé en ce que** la butée fixe est définie suivant l'une des revendications 2 à 3.

6. Système de butées selon la revendication 4 ou 5, équipé pour recevoir un agent lubrifiant, **caractérisé en ce que** la première série de patins assure la portance hydraulique usuelle entre ladite butée fixe et ladite butée tournante.

7. Système de butées selon la revendication précédente, **caractérisé en ce que** la deuxième série de patins assure la portance hydraulique entre ladite butée fixe et ladite butée tournante, en cas de détérioration de la surface des patins de la première série.

8. Turbocompresseur dans un dispositif de suralimentation en comburant gazeux, en particulier en air, d'un moteur à combustion interne, comprenant un arbre de rotation monté entre une roue de turbine, entraînée par l'énergie des gaz d'échappement du moteur, et une roue de compresseur du comburant d'admission, ledit arbre étant monté à rotation dans un palier de guidage équipé d'un système de butées apte à supporter une charge axiale selon l'axe de l'arbre, **caractérisé en ce que** le système de butées est défini à l'une des revendications 4 à 7.

9. Véhicule automobile à moteur à combustion interne comprenant un turbocompresseur défini à la revendication 8.

## Patentansprüche

1. Festes Widerlager eines Systems aus einem festen und einem rotierenden Widerlager, das dazu bestimmt ist, eine axiale Last entlang der Achse einer Drehwelle aufzunehmen, die in einem Führungslager, insbesondere eines Turboladers, gelagert ist, wobei das feste Widerlager in der Form eines Flansches vorliegt, der mit einer Durchgangsöffnung versehen ist, welche die Drehwelle durchlässt, und der auf seiner Seite Gleitstücke mit strukturierten Bereichen aufweist, wobei das feste Widerlager wenigstens zwei Reihen von Gleitstücken umfasst, eine erste Reihe von Gleitstücken (100) mit strukturierten Bereichen, die in einem ersten Kranz auf der Seite des Flansches vorhanden sind, und eine zweite Reihe von Gleitstücken (110) mit strukturierten Bereichen, die in einem mit dem ersten Kranz koaxialen zweiten Kranz auf der Seite des Flansches vorhanden sind, welche in Bezug auf die erste Reihe von Gleitstücken in der Längsrichtung der Achse der Öffnung (10) zurückgesetzt ist, **dadurch gekennzeichnet, dass** die zweite Reihe von Gleitstücken eine durch die strukturierten Bereiche ihrer Gleitstücke definierte Fläche hydraulischer Tragfähigkeit aufweist, welche im Wesentlichen mit derjenigen der ersten Reihe von Gleitstücken identisch oder streng größer als diese ist.

2. Widerlager nach Anspruch 1, **dadurch gekennzeichnet, dass** die erste Reihe von Gleitstücken in Bezug auf die erste Reihe von Gleitstücken um einen Abstand von einigen Mikrometern in der Längsrichtung der Achse der Öffnung zurückgesetzt ist.

3. Widerlager nach einem der Ansprüche 1 bis 2, **dadurch gekennzeichnet, dass** die Gleitstücke der ersten Reihe kranzförmig entlang des Randes der Öffnung (10) des Flansches angeordnet sind und die Gleitstücke der zweiten Reihe von Gleittücken kranzförmig entlang des Randes mit größerem Umfang des von der ersten Reihe von Gleittücken gebildeten Kranzes angeordnet sind.

4. System von Widerlagern, das um eine Drehwelle eines Turboladers herum angebracht wird, die in einem Führungslager gelagert ist, um eine axiale Last entlang der Achse der Welle aufzunehmen, wobei das System ein rotierendes Widerlager, das um die Welle herum angebracht und fest mit ihr verbunden ist, und ein festes Widerlager mit Gleitstücken mit strukturierten Bereichen, das geeignet ist, von der Welle durchquert zu werden, umfasst, wobei die Widerlager in der Längsrichtung ihrer Achse, die der Achse der Welle entspricht, einander gegenüberliegend angeordnet sind, und derart, dass die strukturierten Bereiche der Gleitstücke des festen Widerlagers dem rotierende Widerlager gegenüberliegen, wobei die Widerlager im Betrieb durch einen Schmierfilm getrennt sind, **dadurch gekennzeichnet, dass** das feste Widerlager (1) wenigstens zwei Reihen von Gleitstücken umfasst und so beschaffen ist, wie in Anspruch 1 definiert, und dass das rotierende Widerlager (2) in der Form eines Flansches vorliegt, der mit einer Durchgangsöffnung versehen ist, welche die Welle aufnimmt, und der einen Durchmesser in der Größenordnung desjenigen aufweist, der gleichzeitig von der ersten und der zweiten Reihe von Gleitstücken abgedeckt ist.

5. System von Widerlagern nach dem vorhergehenden Anspruch, **dadurch gekennzeichnet, dass** das feste Widerlager gemäß einem der Ansprüche 2 bis 3 definiert ist.

6. System von Widerlagern nach Anspruch 4 oder 5, welches dafür eingerichtet ist, ein Schmiermittel aufzunehmen, **dadurch gekennzeichnet, dass** die erste Reihe von Gleitstücken die übliche hydraulische Tragfähigkeit zwischen dem festen Widerlager und dem rotierenden Widerlager sicherstellt.

7. System von Widerlagern nach dem vorhergehenden Anspruch, **dadurch gekennzeichnet, dass** die zweite Reihe von Gleitstücken die hydraulische Tragfähigkeit zwischen dem festen Widerlager und dem rotierenden Widerlager im Fall einer Beschädigung der Oberfläche der Gleitstücke der ersten Reihe sicherstellt.

8. Turbolader in einer Vorrichtung zur Aufladung mit gasförmigem Oxidationsmittel, insbesondere mit Luft, einer Brennkraftmaschine, welcher eine Drehwelle umfasst, die zwischen einem Turbinenrad, das von der Energie der Abgase des Motors angetrieben wird, und einem Rad eines Verdichters des Einlassoxidationsmittels angebracht ist, wobei die Welle in einem Führungslager drehbar gelagert ist, das mit einem System von Widerlagern ausgestattet ist, welches geeignet ist, eine axiale Last entlang der Achse der Welle aufzunehmen, **dadurch gekennzeichnet, dass** das System von Widerlagern in einem der Ansprüche 4 bis 7 definiert ist.

9. Kraftfahrzeug mit Brennkraftmaschine, welches einen Turbolader umfasst, wie in Anspruch 8 definiert.

## Claims

1. Stationary thrust bearing of a stationary and rotating thrust bearing system designed to withstand an axial load along the axis of a rotation shaft mounted in a guide bearing, in particular of a turbocharger, said stationary thrust bearing being in the form of a flange in which is created a through-opening that allows the rotation shaft to pass through and has, on its face, pads with structured regions, said stationary thrust bearing comprising at least two sets of pads, a first set of pads (100) with structured regions present in a first ring on the face of said flange, and a second set of pads (110) with structured regions present in a second ring, coaxially with the first ring, on said face of the flange, setback relative to said first set of pads in the longitudinal direction of the axis of said opening (10), **characterized in that** the second set of pads has a hydraulic support surface, defined by the structured regions of its pads, which is essentially identical to or strictly greater than that of the first set of pads.

2. Thrust bearing according to Claim 1, **characterized in that** said first of set of pads is setback from said first set of pads by a distance of several micrometres in the longitudinal direction of the axis of said opening.

3. Thrust bearing according to either of Claims 1 and 2, **characterized in that** the pads of the first set are arranged in a ring following the perimeter of the opening (10) of the flange and the pads of the second set of pads are arranged in a ring following the perimeter of the larger circumference of the ring formed by said first set of pads.

4. Thrust bearing system to be mounted about a rotation shaft of a turbocharger mounted in a guide bearing to withstand an axial load along the axis of the shaft, said system comprising a rotating thrust bearing to be mounted conjointly around said shaft, and a stationary thrust bearing which has pads with structured regions and through which said shaft can pass, said thrust bearings being arranged face-to-face in the longitudinal direction of their axis, corresponding to the axis of the shaft, and such that the structured regions of said pads of the stationary thrust bearing face the rotating thrust bearing, said thrust bearings being separated, in operation, by a lubricating film, **characterized in that** said stationary thrust bearing (1) comprises a least two sets of pads and is as defined in Claim 1, and **in that** said rotating thrust bearing (2) is in the form of a flange provided with a through-opening which receives the shaft, and has a diameter of the order of that covered both by the first and second sets of pads.

5. Thrust bearing system according to the preceding claim, **characterized in that** the stationary thrust bearing is defined according to either of Claims 2 and 3.

6. Thrust bearing system according to Claim 4 or 5, equipped to receive a lubricant, **characterized in that** the first set of pads provides the usual hydraulic support between said stationary thrust bearing and said rotating thrust bearing.

7. Thrust bearing system according to the preceding claim, **characterized in that** the second set of pads provides the hydraulic support between said stationary thrust bearing and said rotating thrust bearing, in the event of the surface of the pads of the first set becoming degraded.

8. Turbocharger in a device for forced induction of gaseous oxidant, in particular air, of an internal combustion engine, comprising a rotation shaft mounted between a turbine wheel that is driven by the energy of exhaust gases of the engine, and a compressor wheel for the intake oxidant, said shaft being mounted in rotation in a guide bearing equipped with a thrust bearing system able to withstand an axial load along the axis of the shaft, **characterized in that** the thrust bearing system is defined in one of Claims 4 to 7.

9. Motor vehicle having an internal combustion engine comprising a turbocharger according to Claim 8.
